**Europäisches Patentamt**

**European Patent Office**

**Office européen des brevets**

(19)

(11) Veröffentlichungsnummer: **0 169 198**
**B1**

(12) **EUROPÄISCHE PATENTSCHRIFT**

(45) Veröffentlichungstag der Patentschrift:
23.09.87

(51) Int. Cl.⁴: **A 47 G 27/04, C 09 J 5/00**

(21) Anmeldenummer: **84901058.2**

(22) Anmeldetag: **01.03.84**

(86) Internationale Anmeldenummer:
**PCT/DE 84/00042**

(87) Internationale Veröffentlichungsnummer:
**WO 84/03426 (13.09.84 Gazette 84/22)**

(54) **VERFAHREN UND VORRICHTUNG ZUM VERKLEBEN VON BODENBELÄGEN, SOWIE BODENBELAG ZUR DURCHFÜHRUNG DES VERFAHRENS.**

(30) Priorität: **03.03.83 DE 3307502**

(43) Veröffentlichungstag der Anmeldung:
**29.01.86 Patentblatt 86/5**

(45) Bekanntmachung des Hinweises auf die Patenterteilung:
**23.09.87 Patentblatt 87/39**

(84) Benannte Vertragsstaaten:
**AT BE CH FR GB LI LU NL SE**

(56) Entgegenhaltungen:
**FR-A-2 186 803**
**FR-A-2 348 957**
**FR-A-2 481 561**
**FR-A-2 490 057**
**US-A-3 519 517**
**US-A-4 253 898**
**US-A-4 339 295**

**Japanese Patents Gezette, Woche X23, "Part I -
Che,ical", veröffentlicht 14. Juli 1976 von Derwent
Publications Ltd. London (GB)**

(73) Patentinhaber: **PILLER, Helmut, Zeuggasse 11,
D-8900 Augsburg (DE)**

(72) Erfinder: **PILLER, Helmut, Zeuggasse 11, D-8900
Augsburg (DE)**

(74) Vertreter: **Liebau, Gerhard, Dipl.- Ing.,
Birkenstrasse 39, D-8900 Augsburg 22 (DE)**

EP 0 169 198 B1

## Beschreibung

Die Erfindung betrifft ein Verfahren und eine Vorrichtung zum Verkleben von Bodenbelägen, bei dem im Schwingungsfeld aktivierbarer, bei Raumtemperatur trockener Klebstoff (Heißsiegelkleber) auf die Unterseite des Bodenbelages aufgebracht wird, und nach dem Verlegen des Bodenbelages der Klebstoff mittels von der Oberseite des Bodenbelages her durchgeführter Schwingungsfeld-Erhitzung aktiviert und der Bodenbelag unmittelbar danach an den Untergrund angedrückt wird. Außerdem betrifft die Erfindung auch einen Bodenbelag zur Durchführung des Verfahrens.

Bei einem bekannten Verfahren zum Verkleben von Bodenbelägen der eingangs erwähnten Art (DE-A- 26 51 756) soll der bei Raumtemperatur trockene Klebstoff durch ein magnetisches Induktionsfeld aktiviert, d.h. erhitzt werden. Die Induktionserwärmung, welche durch Wirbelströme in dem zu erhitzenden Material entsteht, setzt jedoch eine elektrische Leitfähigkeit des zu erwärmenden Materials voraus. Da Klebstoff normalerweise nicht elektrisch leitend ist, wird bei dem bekannten Verfahren zunächst eine Folie erzeugt, die aus dem hitzeschmelzenden Kunststoff besteht. In diese Folie ist eine dünne geschlossene oder gelochte Metallfolie, ein Metallnetz, oder es sind auch einzelne Metall- oder Graphitpartikel eingebettet. Diese so vorbereitete Folie wird entweder vor dem Verlegen des Bodenbelags auf den zu belegenden Untergrund aufgelegt und dann der Fußbodenbelag darüber gebreitet, oder die Folie wird vorher mittels induktiver Erwärmung mit der Unterseite des Bodenbelages verbunden und dann letzterer auf dem Untergrund verlegt. Anschließend wird eine aus einem Rohr gebildete Induktionsspule, die zwischen Bleitschuhen gelagert ist, auf die Oberseite des Bodenbelages aufgesetzt und langsam über die Oberseite bewegt. Ein getrennt aufgestellter Generator ist über elektrische Leitungen mit der Induktionsspule verbunden. Durch die Induktionsspule sollen in der Metallfolie bzw. den Metallpartikeln Wirbelströme erzeugt werden, die den Klebstoff zum Schmelzen bringen. In einer anderen Form soll dieses bekannte Verfahren so ausgeführt werden, daß der pulverförmige Klebstoff mit elektrisch leitenden Partikeln vermischt und diese Pulvermischung auf den Unterboden aufgestreut wird. Darüber wird dann der eigentliche Bodenbelag ausgebreitet und anschließend der pulverförmige Klebstoff durch die über den Teppich geführte Induktionsspule zum Schmelzen gebracht, indem in den elektrisch leitenden Partikeln Wirbelströme erzeugt werden, diese sich dadurch erhitzen und ihrerseits das Klebstoffpulver zum Schmelzen bringen.

Für die heute üblichen Teppichböden ist dieses bekannte Verfahren nicht anwendbar. Um nämlich elektrostatische Aufladungen zu vermeiden, sind in das Polmaterial des Teppichbelages feine Metallfäden eingesponnen oder in die Fasern des Polmaterials selbst sind elektrisch leitende Materialien eingebettet. Hierdurch wird auch der Teppichbelag elektrisch leitend und er erhitzt sich im Induktionsfeld nach dem gleichen Prinzip, wie bei dem bekannten Verfahren der Klebstoff durch die Metalleinlagerungen erhitzt wird. Eine Erhitzung des Teppichbelages führt jedoch zu einer Beschädigung bzw. auch vollständigen Zerstörung des Polmaterials durch Schmelzen. Ein weiterer Nachteil des bekannten Verfahrens besteht darin, daß zunächst eine Folie aus Klebstoffmaterial hergestellt werden muß, in welcher eine Metallfolie oder Metallpartikel eingebettet sind. Die Herstellung dieser Folie ist wegen der Metalleinlagerungen teuer und setzt zusätzliche Arbeitsvorgänge der Herstellung der Folie und der Aufbringung der Folie auf die Unterseite des Bodenbelages voraus. Der Gedanke, den Klebstoff vermischt mit elektrisch leitenden Teilchen auf den Unterboden aufzustreuen, ist praktisch nicht verwertbar, denn ein gleichmäßiger Pulverauftrag wäre zunächst sehr schwierig durchführbar und außerdem würde sich die Schichtdicke des Pulverauftrages sehr schnell verändern, wenn man den Fußbodenbelag über die Pulverschicht zieht. Schließlich sind auch die Kosten für die Vorrichtung zur Erzeugung des magnetischen Induktionsfeldes verhältnismäßig hoch. Es muß nämlich ein Generator mit einer verhältnismäßig hohen Leistung vorhanden sein. Ein derartiger Generator ist nicht nur teuer in der Herstellung, sondern auch wegen seines Gewichtes umständlich in der Handhabung. Außerdem ist in vielen Haushalten die erforderliche hohe Anschlußleistung von 30 Ampere nicht vorhanden. Weiterhin ist es erforderlich, die durch Rohre gebildete Induktionsspule mittels eines Kühlwasserkreislaufes zu kühlen, was einen enormen maschinellen Aufwand erforderlich macht.

Der Erfindung liegt deshalb die Aufgabe zugrunde, ein Verfahren zum Verkleben von Bodenbelägen der eingangs erwähnten Art zu schaffen, welches obige Nachteile vermeidet, in einfacher und zeitsparender Weise problemlos durchgeführt werden kann, und bei dem die Mittel zur Durchführung des Verfahrens, insbesondere die Vorrichtung aber auch der Bodenbelag selbst, einfach herstellbar und leicht zu handhaben sind. In weiterer Ausgestaltung der Erfindung soll auch eine einfache Vorrichtung und ein billig herzustellender Bodenbelag zur Durchführung des Verfahrens geschaffen werden.

Das erfindungsgemäße Verfahren besteht darin, daß ein durch Mikrowellen aktivierbarer Klebstoff, vorzugsweise ein wassermolekülhaltiger Heißsiegelkleber fabrikseitig auf die Unterseite des Bodenbelages aufgebracht und zum Trocknen gebracht wird, und daß die Aktivierung des Klebstoffes mittels Mikrowellenerhitzung durchgeführt wird.

Dieses neue Verfahren ermöglicht ein einwandfreies, preisgünstiges und rasches Verkleben von Bodenbelägen. Fabrikseitig kann mittels geeigneter Maschinen der Klebstoff gleichmäßig in der gewünschten Dicke direkt auf dia Unterseite des Bodenbelages aufgetragen werden. Hierbei muß es sich jedoch um einen Kleber handeln, der aufgrund seiner hohen Dielektrizitätskonstante durch Mikrowellen leicht erwärmbar ist und bei Raumtemperatur trocken ist. Wassermolekülhaltige Heißsiegelkleber erfüllen diese Voraussetzung, da die Wassermoleküle eine hohe Dielektrizitätskonstante aufweisen. Da es sich bei diesen Klebstoffen um handelsübliche Klebstoffe handeln kann, in welche keine Metallfolien oder Metallteilchen eingebettet werden müssen, ist eine direkte fabrikseitige Beschichtung des Bodenbelages ohne weiteres möglich. Der Bodenbelag selbst wird durch den Klebstoffauftrag nur unwesentlich teurer. Er kann an der Baustelle sofort auf dem Unterboden aufgelegt und zurechtgeschnitten werden. Hierbei kann er auch beliebig auf dem Unterboden verschoben werden und braucht nach dem Zurechtschneiden nicht mehr vom Unterboden abgenommen zu werden. Nachdem der Belag zugeschnitten ist, wird der an der Unterseite befindliche Klebstoff mittels Mikrowellenerhitzung von oben her durch den Bodenbelag hindurch aktiviert, d.h. erhitzt. Da Teppichbodenbeläge und auch Kunststoffbodenbeläge eine kleine Dielektrizitätskonstante aufweisen, werden die Bodenbeläge durch die Mikrowellen nicht erwärmt und damit schonend behandelt.

Auch die Vorrichtung zur Durchführung des Verfahrens ist verhältnismäßig einfach im Aufbau und damit billig in der Herstellung. Der in der Vorrichtung eingebaute Mikrowellenerzeuger erfordert nur eine geringe elektrische Leistung von ca. 1,5 kW und die Vorrichtung ist deshalb an jede Haushaltssteckdose anschließbar. Auch hat die Vorrichtung ein geringes Gewicht und ist damit einfach in der Handhabung. Durch den Wegfall einer Wasserkühlung werden die Herstellungskosten der Vorrichtung weiterhin gesenkt.

Soll ein verschlissener Bodenbelag wieder vom Untergrund gelöst werden, so kann dies leicht in umgekehrter Weise erfolgen. Man braucht die Klebstoffschicht lediglich durch Mikrowellen, die von der Oberseite des Belages her auf die Klebstoffschicht einwirken, zu aktivieren und den Bodenbelag abzuziehen, solange die Klebstoffschicht noch weich ist. Da der fabrikseitig an der Unterseite des Bodenbelages angebrachte Klebstoff trocken ist, kann der Bodenbelag gegebenenfalls auch ohne Verklebung lose verlegt werden.

Um Klebstoff zu sparen bzw. um bei gleichem Klebstoffverbrauch örtlich begrenzt eine dickere Klebstoffschicht auftragen zu können, die bei rauhem Untergrund eine bessere Verklebung sicherstellt, wird der Klebstoff zweckmäßig streifenförmig (oder auch punktförmig) auf die Unterseite des Belages aufgetragen.

Die Mikrowellenerhitzung und das Andrücken des Belages wird zweckmäßig bahnenweise durchgeführt, da hierfür nur eine verhältnismäßig kleine und leicht transportable Vorrichtung erforderlich ist.

Die Vorrichtung zur Durchführung des Verfahrens weist erfindungsgemäß einen zum Boden gerichteten, Mikrowellen aussendenden, Mikrowellenerzeuger und mindestens eine benachbart desselben angeordnete Andrückwalze auf.

Ein Bodenbelag zur Durchführung des Verfahrens, der auf seiner Unterseite einen, in einem Schwingungsfeld aktivierbaren, bei Raumtemperatur trockenen Klebstoff (Heißsiegelklebstoff) aufweist, ist dadurch gekennzeichnet, daß der Klebstoff ein durch Mikrowellen erhitzbarer Klebstoff, vorzugsweise ein wassermolekülhaltiger Heißsiegelkleber ist, der fabrikseitig auf die Unterseite des Bodenbelages aufgebracht ist.

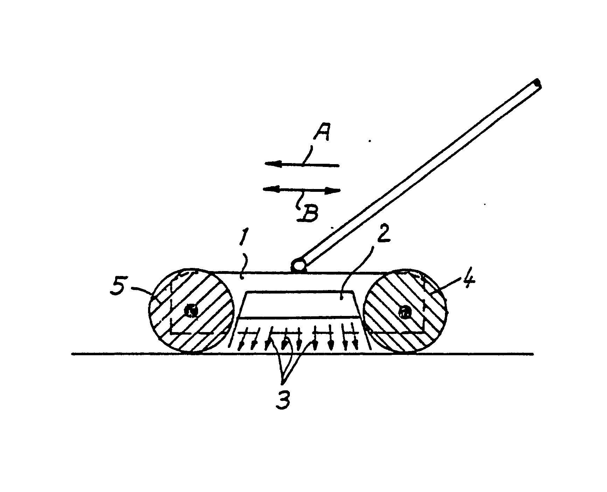

Eine Vorrichtung zur Durchführung des erfindungsgemäßen Verfahrens ist nachfolgend anhand der Zeichnung erläutert. Diese Zeichnung zeigt einen Vertikalschnitt durch eine Vorrichtung zur Durchführung des erfindungsgemäßen Verfahrens.

In einem Fahrgestell 1 ist ein Mikrowellanerzeuger 2 angeordnet, der nach unten, zum Boden gerichtete, mit Pfeilen 3 angedeutete Mikrowellen aussendet. In Fahrtrichtung hinter diesem Mikrowellenerzeuger iat in dem Gestell 1 eine erste Andrückwalze 4 um eine horizontale Achse drehbar gelagert. Gegebenenfalls kann noch eine zweite Andrückwalze 5 auf der anderen Seite des Mikrowellenerzeugers vorgesehen sein.

Ist nur eine Andrückwalze 4 vorgesehen, so muß man die Vorrichtung stets in einer Richtung A über den verlegten Bodenbelag bewegen. Hierbei wird durch die Mikrowellen 3, die durch den Bodenbelag hindurchgehen, die an seiner Unterseite vorgesehene Klebstoffschicht aktiviert, d.h. weich und klebrig gemacht. Während diese Klebstoffschicht noch weich und klebrig ist, wird bei Weiterbewegung der Vorrichtung der Bodenbelag durch die Andrückwalze 4 an den Untergrund gedrückt und damit ein inniger Kontakt zwischen der Klebstoffschicht und dem Untergrund hergestellt. Bei Verwendung von zwei Andrückwalzen 4, 5 kann die Vorrichtung in Richtung 8 hin- und herbewegt werden, wobei abwechselnd die jeweils in Fahrtrichtung hinter dem Mikrowellenerzeuger liegende Andrückwalze 4 oder 5 die Anpressung des Bodenbelages an den Untergrund übernimmt.

Durch Verwendung der Mikrowellenerhitzung ist in kürzester Zeit eine Aktivierung der Klebstoffschicht möglich, ohne daß hierdurch der Bodenbelag bleibend verändert wird.

## Patentansprüche

1. Verfahren zum Verkleben von Bodenbelägen, bei dem im Schwingungsfeld aktivierbarer, bei Raumtemperatur trockener Klebstoff (Heißsiegelkleber) auf die Unterseite des Bodenbelages aufgebracht wird, und nach dem Verlegen des Bodenbelages der Klebstoff mittels von der Oberseite des Bodenbelages her durchgeführter Schwingungsfelderhitzung aktiviert und der Bodenbelag unmittelbar danach an den Untergrund angedrückt wird, dadurch gekennzeichnet, daß ein durch Mikrowellen aktivierbarer Klebstoff, vorzugsweise wassermolekülhaltiger Heißsiegelkleber, fabrikseitig auf die Unterseite des Bodenbelags aufgebracht und zum Trocknen gebracht wird, und daß die Aktivierung des Klebstoffs mittels Mikrowellenerhitzung durchgeführt wird.

2. Verfahren nach Anspruch 1, dadurch gekennzeichnet, daß der Klebstoff streifenförmig auf die Unterseite aufgetragen wird.

3. Verfahren nach Anspruch 1 oder 2, dadurch gekennzeichnet, daß die Mikrowellenerhitzung und das Andrücken des Belages bahnenweise durchgeführt wird.

4. Vorrichtung zur Durchführung des Verfahrens nach Anspruch 1 oder 3, dadurch gekennzeichnet, daß die Vorrichtung einen zum Boden gerichteten Mikrowellen aussendenden Mikrowellenerzeuger und mindestens eine benachbart desselben angeordnete Andrückwalze aufweist.

5. Bodenbelag zur Durchführung des Verfahrens nach Anspruch 1 oder 2, der auf seiner Unterseite in einem Schwingungsfeld aktivierbaren, bei Raumtemperatur trockenen Klebstoff (Heißsiegelkleber) aufweist, dadurch gekennzeichnet, daß der Klebstoff ein durch Mikrowellen erhitzbarer Klebstoff, vorzugsweise ein wassermolekülhaltiger Heißsiegelkleber, ist, der fabrikseitig auf die Unterseite des Bodenbelages aufgebracht ist.

## Claims

1. A method for glueing floor coatings in which a glue (hot sealing glue) which is dry at room temperature and capable of activation in the oscillation field, is applied to the underside of the floor coating, the glue being activated after placing of the floor coating from the top of the floor coating by oscillation-field heating, the floor covering being pressed immediately afterward against the ground, characterized in that a glue, preferably hot sealing glue containing water molecules, capable of activatian by microwaves, is applied and dried on the underside of the floor coating in the factory and that the activation of the glue is performed by microwave heating.

2. A method according to claim 1, characterized in that the glue is applied to the underside in form of strips.

3. A method according to claim 1 or 2, characterized in that the heating by microwaves and the pressing of the floor coating is performed in widths.

4. A device used to implement the method according to claim 1 or 3, characterized in that the device comprises a microwave producer to direct microwaves to the ground and at least one pressing roller arranged next to the microwave producer.

5. A floor coating used to implement the method according to claim 1 or 2, comprising a glue (hot sealing glue), being capable of activation in an oscillation field and beeing dry at room temperature, characterized in that the glue, preferably a glue containing water molecules, being capable of heating by microwaves is factory applied on the underside of the floor coating.

## Revendications

1. Procédé pour coller des revêtements de sols, dans lequel une colle, sèche à température ambiante et pouvant être activée par un champ de vibrations (colle de scellement à chaud), est appliquée sur la face inférieure du revêtement de sol, la colle étant activée, après la pose du revêtement de sol, par chauffage par champ de vibrations exécuté depuis la face supérieure du revêtement de sol, et le revêtement de sol étant pressé immédiatement ensuite sur le support, caractérisé en ce qu'une colle pouvant être activée par micro-ondes, de préférence une colle de scellement à chaud contenant des molécules d'eau, est appliquée en usine sur la face inférieure du revêtement de sol, et est séchée, et l'activation de la colle est réalisée par chauffage par micro-ondes.

2. Procédé selon la revendication 1, caractérisé en ce que la colle est appliquée par bandes sur la face inférieure.

3. Procédé selon la revendication 1 ou 2, caractérisé en ce que le chauffage par micro-ondes, et le pressage du revêtement sur son support, sont effectués par bandes.

4. Dispositif pour exécuter le procédé selon la revendication 1 ou 3, caractérisé en ce que le dispositif comprend un émetteur de micro-ondes émettant des micro-ondes dirigées vers le sol, et au moins un cylindre de compression disposé à proximité de celui-ci.

5. Revêtement de sol pour exécuter le procédé selon la revendication 1 ou 2, qui comporte à sa surface inférieure une colle sèche à température ambiante (colle de scellement à chaud) pouvant être activée par un champ de vibrations, caractérisé en ce que la colle est une colle pouvant être chauffée par micro-ondes, de préférence une colle de scellement à chaud contenant des molécules d'eau, qui est appliquée en usine sur la face inférieure du revêtement de sol.